(19) Europäisches Patentamt
European Patent Office
Office européen des brevets

(11) Veröffentlichungsnummer: **0 074 569 B1**

(12) **EUROPÄISCHE PATENTSCHRIFT**

(45) Veröffentlichungstag der Patentschrift: **19.06.85**

(51) Int. Cl.⁴: **C 09 B 23/06**, C 09 B 23/10, C 09 B 23/14, D 06 P 1/42

(21) Anmeldenummer: **82108091.8**

(22) Anmeldetag: **02.09.82**

(54) **Kationische Methinfarbstoffe, Verfahren zu ihrer Herstellung sowie deren Verwendung zum Färben von Textilmaterialien und anderen Substraten.**

(30) Priorität: **15.09.81 DE 3136583**

(43) Veröffentlichungstag der Anmeldung: **23.03.83 Patentblatt 83/12**

(45) Bekanntmachung des Hinweises auf die Patenterteilung: **19.06.85 Patentblatt 85/25**

(84) Benannte Vertragsstaaten: **BE CH DE FR GB IT LI**

(56) Entgegenhaltungen:
**BE - A - 837 655**
**US - A - 3 514 453**
**US - A - 3 980 430**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Raue, Roderich, Dr., Berta-von-Suttner-Strasse 48, D-5090 Leverkusen 1 (DE)**
Erfinder: **Hühne, Volker, Dr., Kurt-Schumacher-Ring 15a, D-5090 Leverkusen 1 (DE)**
Erfinder: **Kühlthau, Hans-Peter, Dr., Paul-Klee-Strasse 48, D-5090 Leverkusen 1 (DE)**

**EP 0 074 569 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung kationischer Methinfarbstoffe der allgemeinen Formel

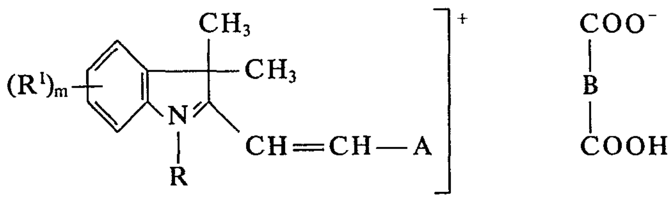

(I)

in welcher

R für einen gegebenenfalls durch Hydroxy, Alkoxy mit 1 bis 4 C-Atomen, Acyloxy, Halogen, Cyan, Carboxy, $C_1$- bis $C_4$-Carbalkoxy, Carbonamido oder Acetyl substituierten Alkylrest mit 1 bis 4 C-Atomen,

$R^1$ für Wasserstoff, einen Alkylrest mit 1 bis 4 C-Atomen, Halogen, Alkoxy mit 1 bis 4 C-Atomen, Hydroxyalkoxy mit 2—4 C-Atomen, einen gegebenenfalls durch Halogen, $C_1$—$C_4$-Alkyl oder $C_1$—$C_4$-Alkoxy substituierten Phenoxyrest, Benzyloxy, Benzyl, Carboxyl, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

A für einen Rest der Formel

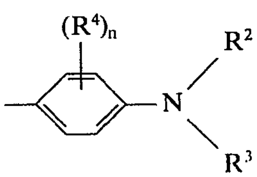

in welcher die Reste

$R^2$ und $R^3$ unabhängig voneinander für einen gegebenenfalls durch Hydroxy, $C_1$- bis $C_4$-Alkoxy, Halogen, Cyan, Phenyl, Carbalkoxy mit 1 bis 4 C-Atomen, Carbonamid, Acyloxy, Benzyloxy, Sulfonamido oder Acylamino substituierten Alkylrest mit 1 bis 4 C-Atomen stehen
$R^2$ zusätzlich noch für einen gegebenenfalls durch Halogen, $C_1$—$C_4$-Alkyl oder $C_1$- bis $C_4$-Alkoxy substituierten Phenyl- oder Benzylrest steht oder mit dem benachbarten C-Atom des Benzolringes einen teilhydrierten N- und gegebenenfalls O-haltigen 5- oder 6-Ring bilden kann,
$R^4$ Wasserstoff, einen Alkylrest mit 1 bis 4 C-Atomen, einen Alkoxyrest mit 1 bis 4 C-Atomen oder Halogen bedeutet,

oder für einen Rest der Formel

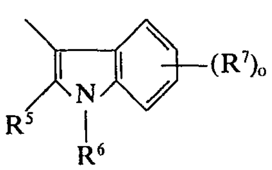

in welcher

$R^5$ für einen Alkylrest mit 1 bis 4 C-Atomen, einen gegebenenfalls durch Halogen, $C_1$- bis $C_4$-Alkyl oder $C_1$- bis $C_4$-Alkyloxy substituierten Phenylrest oder einen Carbalkoxyrest mit 1 bis 4 C-Atomen,
$R^6$ H, einen gegebenenfalls durch Hydroxy, Halogen, Alkoxy mit 1 bis 4 C-Atomen, Cyan oder Acyloxy substituierten Alkylrest mit 1 bis 4 C-Atomen und
$R^7$ Wasserstoff, Halogen, $C_1$- bis $C_4$-Alkyl, $C_1$- bis $C_4$-Alkoxy, Carbalkoxy mit 1 bis 4 C-Atomen, $C_1$- bis $C_4$-Alkylsulfonyl, Phenylsulfonyl, Acetyl oder Benzoyl bedeuten,

oder für einen Rest der Formel

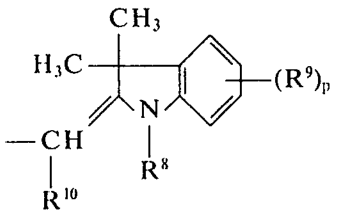

steht, in welcher

$R^8$ und $R^9$ unabhängig voneinander die gleiche Bedeutung wie in Formel I haben, in der $R^{10}$ für Wasserstoff oder die Cyangruppe steht,

in welcher der Rest

B für eine Einfachbindung oder für einen durch Hydroxylreste und gegebenenfalls eine zusätzliche Carboxylgruppe substituierten $C_1$- bis $C_4$-Alkylenrest steht

und in welcher die Indizes m, n, o und p unabhängig voneinander 1 bis 4 bedeuten.

Das Verfahren ist dadurch gekennzeichnet, daß man eine Verbindung der Formel

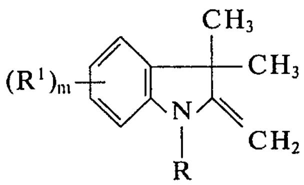

(II)

worin

R, $R^1$ und m die gleiche Bedeutung wie in Formel I haben,

mit äquimolekularen Mengen einer Verbindung der Formel

A–CHO (III)

in welcher

A die in Formel I angegebene Bedeutung besitzt, und mit 1 bis 5 mol einer Verbindung der Formel

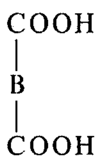

(IV)

in welcher

B die gleiche Bedeutung wie in Formel I hat, in Gegenwart von 0–30% eines organischen Lösungsmittels und 0–15% Wasser, beide Prozentangaben bezogen auf die Summe der Gewichte von II und III,

zur Umsetzung bringt. Bevorzugt ist hierbei ein Mol-Verhältnis von 0,9 bis 1,2 mol der Verbindung IV auf je 1 mol der Verbindungen II und III.

Die Umsetzung erfolgt vorzugsweise in einer Reaktionsapparatur, die in der Lage ist, zähflüssige und später kristallisierende Farbstoffschmelzen gleichmäßig zu vermischen und zu einem Pulver zu vermahlen.

Besonders geeignet sind für diese Umsetzung Reaktionsschnecken, Knetapparaturen, Schaufeltrockner und Allphasenreaktoren.

Der Vorteil des neuen Verfahrens besteht darin, daß man – ohne eine wäßrige Phase zu durchlaufen, aus der der Farbstoff durch Aussalzen, Abfiltrieren und Trocknen isoliert werden muß – unmittelbar zum verkaufsfertigen Farbstoff gelangt. Bei dem neuen Verfahren fällt daher kein Abwasser an, und das arbeits- und energieaufwendige Trocknen des aus der Lösung isolierten Farbstoffes entfällt.

Die Kondensation zu Farbstoffen der Formel I in Gegenwart größerer Mengen Lösungsmittel und in Gegenwart von Säuren, die verschieden sind von den Säuren der Formel IV, und die anschließende Isolierung durch Aussalzen der wäßrigen Lösung ist beispielsweise aus den US-Patentschriften 3 812 108 und 3 980 430 bekannt.

Für das Verfahren geeignete Zwischenprodukte der Formeln II und III finden sich in vielen Publikationen, u. a. seien genannt:

DE-C-614 325, 615 130, 711 665, 721 020, 730 336, 742 039, 744 019, 891 120, 1 070 316, 1 099 670,
DE-B-1 044 022, 1 049 994, 1 158 646, 1 569 734, 2 031 202, 2 040 872, 2 234 468,
DE-A-1 929 417, 2 040 652, 2 040 653, 2 064 881, 2 064 882, 2 101 223, 2 130 790, 2 135 834, 2 200 027, 2 202 300, 2 243 627, 2 726 437,
US-A-2 815 338, 3 394 130, 3 865 837, 3 888 850,
JA-C-3 217-69, 13 748-66, 19 951-65, 49 14 525, 49 72 477, 49 74 217, 50 05 683, 73 12 460, 73 13 752, 74 04 531, 76 35 405,
FR-C-1 261 976,
BE-C-734 765.

Geeignete Dicarbonsäuren der allgemeinen Formel IV sind Oxalsäure, Weinsäure, Äpfelsäure und Citronensäure.

Eine bevorzugte Gruppe der nach dem neuen Verfahren herstellbaren Farbstoffe entspricht der allgemeinen Formel

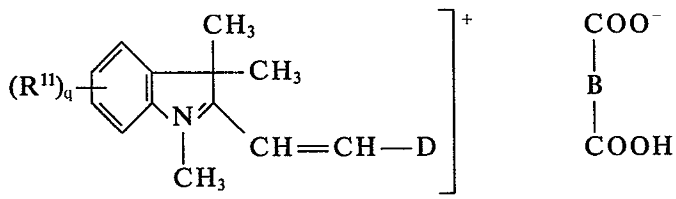

(V)

in welcher

$R^{11}$ für Wasserstoff, Chlor, Methyl, Methoxy, Ethoxy und Carbomethoxy,
D für einen Rest der Formel

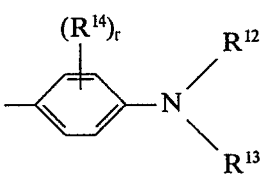

worin

$R^{12}$ und $R^{13}$ unabhängig voneinander einen gegebenenfalls durch Hydroxy, Methoxy, Ethoxy, Chlor, Cyan, Phenyl oder Acyloxy substituierten Alkylrest mit 1 bis 4 C-Atomen und
$R^{12}$ zusätzlich einen durch Chlor, Methyl, Methoxy oder Ethoxy substituierten Phenylrest und
$R^{14}$ Wasserstoff, Methyl, Chlor, Methoxy oder Ethoxy bezeichnen,

oder für einen Rest der Formel

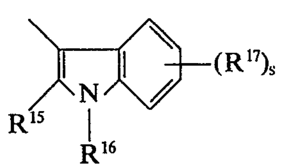

in welcher

$R^{15}$ Methyl oder gegebenenfalls durch Chlor, Methyl oder Methoxy substituiertes Phenyl,
$R^{16}$ einen gegebenenfalls durch Hydroxy, Chlor, Cyan oder Acyloxy substituierten $C_1$- bis $C_4$-Alkylrest oder H und
$R^{17}$ Wasserstoff, Methyl, Methoxy oder Ethoxy bedeuten,

oder für einen Rest der Formel

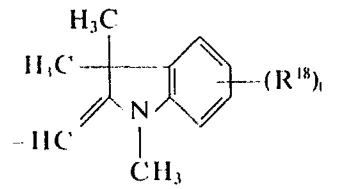

in welcher

$R^{18}$ unabhängig voneinander die gleiche Bedeutung wie $R^{11}$ in Formel V hat, stehen,

in welcher der Rest

B die gleiche Bedeutung hat wie in Formel I besitzt und

die Indizes q, r, s und t für 1 bis 2 stehen.

Vorzugsweise wird unter Acyl Acetyl, Propionyl, Benzoyl und Carbamoyl verstanden.

Unter diesen Farbstoffsalzen sind wiederum diejenigen bevorzugt, in welchen

B für eine Einfachbildung steht, das Anion also den Rest der Oxalsäure darstellt.

Die Umsetzung kann auch in Gegenwart eines Lösungsmittels vorgenommen werden, das während der Reaktion oder nach beendeter Umsetzung aus der Reaktionsapparatur wieder abdestilliert wird. Der Zusatz beträgt höchstens 30% der Summe der Gewichte von II und III.

Als Lösungsmittel kommen in Frage:
Toluol, Xylol, Chlorbenzol, Dichlorbenzol, Aceton, Tetrahydrofuran, Dioxan und Dimethylglykol.

Die Umsetzung kann auch in Gegenwart von Wasser mit höchstens 15% der Summe der Gewichte von II und III durchgeführt werden, das beispielsweise als Kristallwasser der Säuren eingebracht wird.

Der Vorteil des neuen Verfahrens besteht aber gerade darin, daß in den meisten Fällen auf die Anwendung eines Lösungsmittels verzichtet werden kann.

Verwendet man als Reaktionsgefäß einen Schaufeltrockner, so kann man unmittelbar zu verkaufsfertigen Farbstoffeinstellungen gelangen, indem man das üblicherweise zugesetzte Stellmittel, wie Natriumsulfat, Kochsalz oder Dextrin, vor, während oder nach der Reaktion zusetzt. Der Zusatz anorganischer Salze, insbesondere von Natriumsulfat bereits zu Beginn der Reaktion ist von Vorteil, da hierdurch Krustenbildung an der Reaktorwand verhindert wird. Die Reaktion wird bei Temperaturen zwischen 40 und 120°C durchgeführt, bevorzugt ist der Temperaturbereich von 60—100°C.

Die erfindungsgemäß hergestellten Farbstoffe eignen sich zum Färben natürlicher und synthetischer Substrate. Sie sind geeignet zum Färben tannierter Baumwolle, sauer modifizierter Polyamid- und Polyesterfasern, insbesondere aber zum Färben von Fasermaterialien aus Polyacrylnitril. Weiter sind sie geeignet zum Färben von holzschliffhaltigem Papier, von Leder sowie zur Herstellung von Kugelschreiberpasten, Tinten und Stempelfarben.

## Beispiel 1

In einem Laboratoriumsschaufeltrockner von ca. 3 l Rauminhalt werden 950 g 4-(N-Methyl-N-cyanethyl-amino)-benzaldehyd und 865 g 1,3,3-Trimethyl-2-methylen-indolin bei 75°C bis zur homogenen Schmelze gerührt. Die Heizung wird nun abgestellt. Es werden 450 g wasserfreie Oxalsäure eingetragen. Innerhalb von 8 min bildet sich eine bronzierende Schmelze und nach weiteren 3 min kristallisiert der Farbstoff. Das Heizbad des Schaufeltrockners wird nun wieder auf 100°C erwärmt und 2 h bei 100°C gehalten. Anschließend wird im Vakuum der Wasserstrahlpumpe innerhalb von 3 h bei 100°C das bei der Kondensation entstandene Wasser abdestilliert. Dann läßt man den Ansatz unter Rühren erkalten und entnimmt der Reaktionsapparatur den pulverförmigen Farbstoff. Man erhält 2110 g des Farbstoffes der Formel:

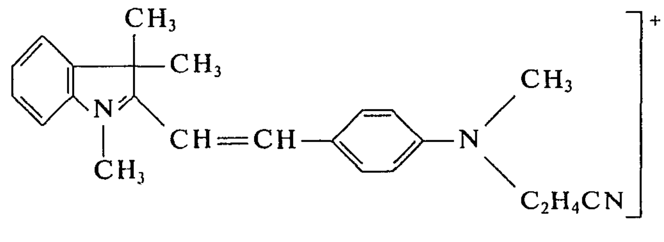

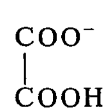

der Polyacrylnitril in brillanten Rottönen anfärbt. (C. I. Hue Indication Chart No. 49)

Verwendet man anstelle von 1,3,3-Trimethyl-2-methylen-indolin die äquimolekulare Menge 1,3,3,5-Tetramethyl-2-methylen-indolin, 1,3,3-Trimethyl-5-chlor-2-methylen-indolin, 1,3,3-Trimethyl-5-methoxy-2-methylen-indolin, 1,3,3-Trimethyl-5,7-dichlor-2-methylen-indolin oder 1,3,3-Trimethyl-5-chlor-7-methoxy-2-methylen-indolin und verfährt sonst in gleicher Weise, so erhält man die entsprechenden Farbstoffe in Form ihrer Oxalate, die Polyacrylnitrilmaterialien in brillanten Rottönen anfärben.

## Beispiel 2

In einem Laboratoriumsschaufeltrockner von ca. 3 l Rauminhalt, der mit Schlagstangen ausgerüstet ist, werden 865 g 1,3,3-Trimethyl-2-methylen-indolin und 745 g 4-Dimethylamino-benzaldehyd bei 50°C zu einer homogenen Schmelze verrührt und 450 g wasserfreie Oxalsäure zugesetzt. Nach 4 min bildet sich eine bronzierende Schmelze, nach weiteren 2 min kristallisiert der Farbstoff. Man erwärmt nun das Heizbad des Schaufeltrockners auf 100°C und rührt 3 h bei dieser Temperatur. Anschließend wird innerhalb von 2 h bei 100°C im Vakuum der Wasserstrahlpumpe das Kondensationswasser abdestilliert und der Schaufeltrockner weiter bis zum Erkalten gerührt. Dann wird das Farbstoffpulver der Reaktionsapparatur entnommen. Man erhält 1956 g des Farbstoffes der Formel:

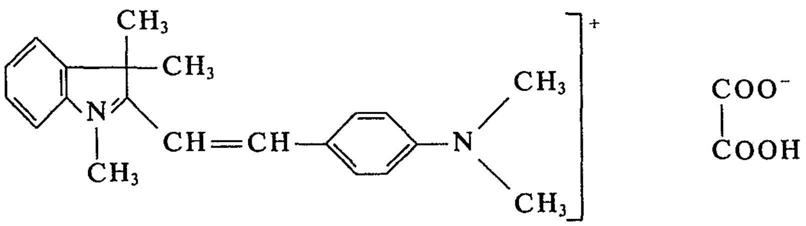

der Polyacrylnitril in klaren blaustichigen Rottönen anfärbt. (C. I. Hue Indication Chart No. 9)

Verwendet man anstelle des hier eingesetzten 4-Dimethylamino-benzaldehydes die äquimolekulare Menge von 2-Methyl-4-dimethylamino-benzaldehyd, 2-Chlor-4-dimethylamino-benzaldehyd, 2-Methoxy-4-dimethylamino-benzaldehyd, 4-(N-Methyl-N-benzyl-amino)-benzaldehyd, 4-(N-Ethyl-N-benzylamino)-benzaldehyd, 4-Dibenzylamino-benzaldehyd oder 4-(N-Methyl-N-phenyl-amino)-benzaldehyd und verfährt sonst in gleicher Weise, so erhält man ebenfalls wertvolle Farbstoffe in Form ihrer Oxalate, die Polyacrylnitril in blaustichigen Rottönen anfärben.

## Beispiel 3

In einem Laboratoriumsschaufeltrockner von ca. 3 l Rauminhalt, der mit Schlagstangen ausgerüstet ist, erwärmt man 531 g 4-Diethylamino-benz-aldehyd und 519 g 1,3,3-Trimethyl-2-methylen-indolin auf 45°C. In die homogene Schmelze trägt man 270 g Oxalsäure ein, wobei die Temperatur innerhalb von 14 min auf 88°C ansteigt. Der Farbstoff kristallisiert dann aus, wobei die Temperatur bis auf 98°C ansteigt. Man erwärmt noch 2 h auf 100°C, dann weitere 30 min unter dem Vakuum der Wasserstrahlpumpe und 30 min im Vakuum der Ölpumpe, wobei am absteigenden Kühler das Kondensationswasser abdestilliert. Man erhält 1251 g eines pulverförmigen Farbstoffes der Formel:

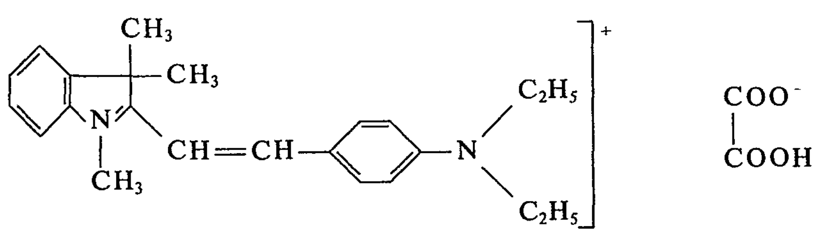

der Polyacrylnitril in stark blaustichigem Rot anfärbt. (C. I. Hue Indication Chart Nr. 10)

Verwendet man anstelle von 4-Diethylamino-benzaldehyd die äquimolekulare Menge 2-Methyl-4-diethylamino-benzaldehyd, 2-Chlor-4-diethylamino-benzaldehyd, 2-Methoxy-4-diethylamino-benzaldehyd, 2-Methyl-4-(N-ethyl-N, β-cyanethylamino)-benzaldehyd, 2-Methyl-4-(bis-(β-cyanethyl)-amino)-benzaldehyd oder 4-(N-Ethyl-N-carbonamidoethyl-amino)-benzaldehyd und verfährt sonst in gleicher Weise, so erhält man ebenfalls pulverförmige Farbstoffe in Form ihrer Oxalate, die Polyacrylnitril in brillanten blaustichig roten Tönen anfärben.

## Beispiel 4

In einem Laboratoriumsreaktor werden 225 g 2-Methyl-4-(N-ethyl-N, β-chlorethyl-amino)-benzaldehyd und 173 g 1,3,3-Trimethyl-2-methylen-indolin bei 45°C gelöst. Bei 80°C werden 90 g Oxalsäure eingetragen, wobei die Temperatur bis auf 100°C ansteigt. Nach 1,5 h Rühren bei 100°C ist der Farbstoff kristallisiert. Man läßt insgesamt 3 h bei 100°C rühren und destilliert dann zunächst 30 min im Vakuum der Wasserstrahlpumpe ab, dann weitere 30 min bei 5 Torr das Reaktionswasser ab.

Man erhält 428 g eines Farbstoffes der Formel:

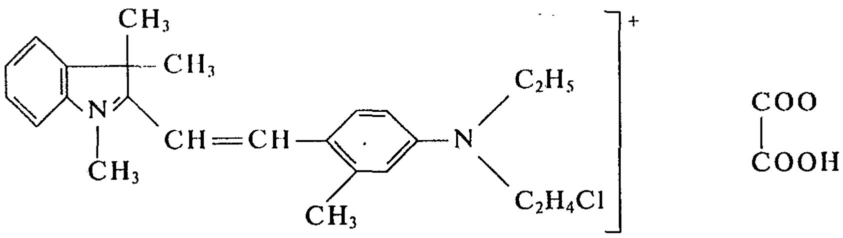

der Polyacrylnitrilfasern in blaustichig roten Tönen anfärbt. (C. I. Hue Indication Chart Nr. 10)

Verwendet man anstelle von 1,3,3-Trimethyl-2-methylen-indolin die äquimolekulare Menge 1,3,3-Trimethyl-5-methylsulfonyl-2-methylen-indolin, 1,3,3-Trimethyl-5-phenylsulfonyl-2-methylen-indolin, 1,3,3-Trimethyl-5-acetyl-2-methylen-indolin oder 1,3,3-Trimethyl-5-phenoxy-2-methylen-indolin und verfährt sonst in gleicher Weise, so erhält man ebenfalls wertvolle Farbstoffe in Form ihrer Oxalate, die Polyacrylnitrilfasern in blaustichig roten Tönen anfärben.

## Beispiel 5

In einem Laboratoriumsreaktor werden 197,5 g 4-(N-Methyl-N-β-chlorethyl-amino)-benzaldehyd und 173 g 1,3,3-Trimethyl-2-methylen-indolin bei 45°C zu einer homogenen Schmelze verrührt und 90 g Oxalsäure zugesetzt. Die Temperatur steigt bis auf 70°C an und der Farbstoff kristallisiert nach 30 min aus. Man läßt noch 2 h bei 100°C weiterrühren und destilliert dann 30 min bei 15 Torr und weitere 30 min bei 5 Torr das Reaktionswasser ab. Man erhält 434 g eines pulverförmigen Farbstoffes der Formel:

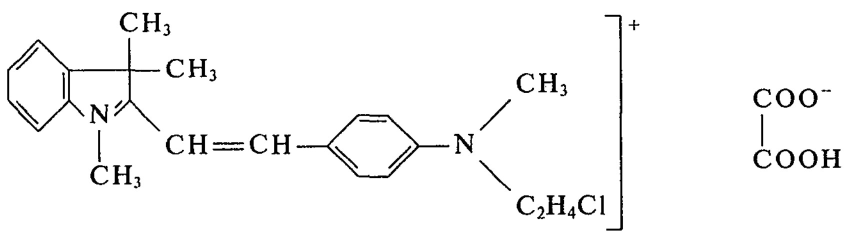

der Polyacrylnitrilfasern in einem blaustichigem Rosa anfärbt.
(C. I. Hue Indication Chart Nr. 50)

Verwendet man anstelle von 1,3,3-Trimethyl-2-methylen-indolin die äquimolekulare Menge 1,3,3-Trimethyl-5-carbo-ethoxy-2-methylen-indolin, 1-Ethyl-3,3-dimethyl-5-carbo-ethoxy-2-methylen-indolin oder 1,3,3-Trimethyl-5-benzyl-2-methylen-indolin und verfährt sonst in gleicher Weise, so erhält man ebenfalls wertvolle Farbstoffe, die Polyacrylnitrilfasern in blaustichigen Rosatönen anfärben.

## Beispiel 6

In einem Laboratoriumsreaktor werden 149 g 4-Dimethylamino-benzaldehyd und 173 g 1,3,3-Trimethyl-2-methylen-indolin bei 50°C bis zu einer homogenen Schmelze verrührt und anschließend 150 g Weinsäure eingetragen. Man erwärmt nun auf 100°C. Nach 1stündigem Rühren kristallisiert der Farbstoff aus. Man läßt insgesamt 4 h bei 100°C rühren und destilliert anschließend von 1 h bei 100°C und einem Vakuum von 15 Torr das bei der Kondensation gebildete Wasser ab. Man erhält 458 g eines pulverförmigen Farbstoffes der Formel

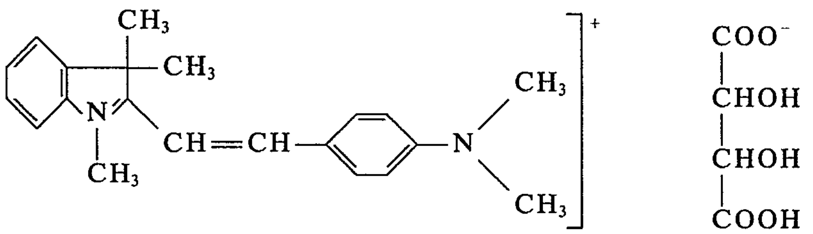

der Polyacrylnitril in einem blaustichigen Rot anfärbt. (C. I. Hue Indication Chart Nr. 9)

Setzt man anstelle von 149 g 4-Dimethylamino-benzaldehyd 195 g 4-(N-Methyl-N-$\beta$-cyanethyl-amino)-benzaldehyd ein und verfährt sonst in gleicher Weise, so erhält man 482 g eines pulverförmigen Farbstoffes, der Polyacrylnitril in einem brillanten gelbstichigen Rot anfärbt.

## Beispiel 7

In einem Laboratoriumsschaufeltrockner werden 885 g 4-Diethylamino-benzaldehyd und 880 g 1,3,3-Trimethyl-2-methylen-indolin auf 60°C erwärmt, bis eine homogene Schmelze entstanden ist. Anschließend werden 1050 g Citronensäure zugesetzt und das Reaktionsgemisch auf 100°C erwärmt. Nach 30 min kristallisiert der Farbstoff aus. Man läßt noch 2 h bei 100°C nachrühren und destilliert anschließend 3 h bei 100°C und dem Vakuum der Wasserstrahlpumpe das entstandene Kondensationswasser ab. Man erhält 2527 g eines pulverförmigen Farbstoffes der Formel:

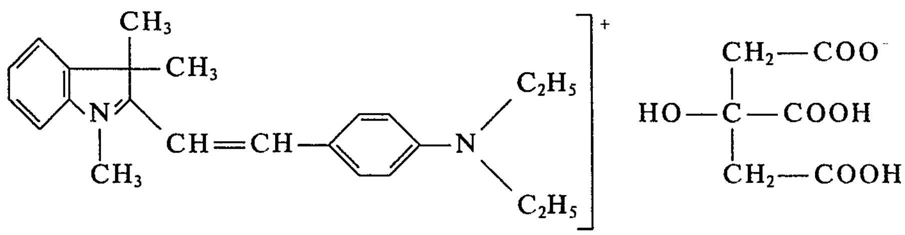

der Polyacrylnitrilfasern in einem stark blaustichigen Rot anfärbt.
(C. I. Hue Indication Chart Nr. 10)

## Beispiel 8

In einem Laboratoriumsreaktor werden 177 g 4-Diethylamino-benzaldehyd und 178 g 1,3,3-Trimethyl-2-methylen-indolin bei 50°C verrührt, bis sich eine homogene Schmelze bildet. Anschließend setzt man 150 g Weinsäure zu und erhöht die Reaktionstemperatur auf 100°C. Nach 30 min kristallisiert der Farbstoff aus. Man läßt das Reaktionsgemisch insgesamt 3 h bei 100°C rühren und destilliert anschließend innerhalb von 1 h im Vakuum der Wasserstrahlpumpe das gebildete Kondensationswasser ab. Man erhält 464 g eines pulverförmigen Farbstoffes der Formel:

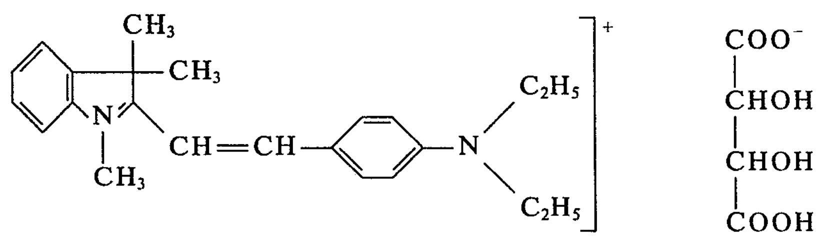

der Polyacrylnitrilfasern in stark blaustichig roten Tönen anfärbt.
(C I. Hue Indication Chart Nr. 10)

Verwendet man anstelle von Weinsäure die äquimolekulare Menge von Äpfelsäure oder Schleimsäure und verfährt sonst in gleicher Weise, so erhält man ebenfalls wertvolle Farbstoffe, die Polyacrylnitril in blaustichig roten Tönen anfärben.

## Beispiel 9

In einem Laboratoriumsschaufeltrockner werden 603 g 1,3,3-Trimethyl-2-methylen-indolin-$\omega$-aldehyd und 519 g 1,3,3-Trimethyl-2-methylen-indolin auf 75°C erwärmt und innerhalb von 20 min 270 g

wasserfreie Oxalsäure eingetragen. Man erwärmt nun das Reaktionsgemisch auf 100°C und läßt 6 h bei 100°C rühren. Nach 30 min beginnt die Kristallisation des Farbstoffes. Man läßt den Reaktionsansatz 6 h bei 100°C rühren und destilliert anschließend 4 h bei 100°C im Vakuum der Wasserstrahlpumpe das Kondensationswasser ab. Man erhält 1280 g eines pulverförmigen Farbstoffes der Formel:

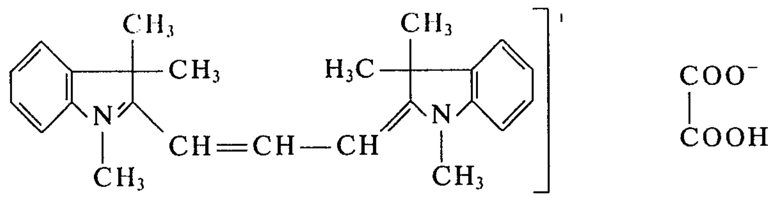

der holzschliffhaltiges Papier in brillanten Rottönen anfärbt.
(C. I. Hue Indication Chart Nr. 51)

Verwendet man anstelle des 1,3,3-Trimethyl-2-methylen-indolin-ω-aldehydes äquimolekulare Mengen von 1,3,3-Trimethyl-5-methoxy-2-cyanmethylen-indolin-ω-aldehyd oder 1,3,3,5-Tetramethyl-2-cyanmethylen-indolin-ω-aldehyd und verfährt sonst in gleicher Weise, so erhält man ebenfalls wertvolle Farbstoffe, die Papier in brillanten Rottönen anfärben.

Beispiel 10

In einem Laboratoriumsreaktor werden 201 g 1,3,3-Trimethyl-2-methylen-indolin-ω-aldehyd und 203 g 1,3,3-Trimethyl-5-methoxy-2-methylen-indolin auf 60°C erwärmt, bis eine klare Schmelze entstanden ist. Man setzt anschließend 90 g Oxalsäure zu und erwärmt das Reaktionsgemisch auf 100°C. Die Kristallisation des Farbstoffes beginnt nach 30 min. Man läßt den Ansatz 17 h bei 100°C rühren und destilliert anschließend im Vakuum das gebildete Kondensationswasser ab. Man erhält 427 g eines pulverförmigen Farbstoffes der Formel:

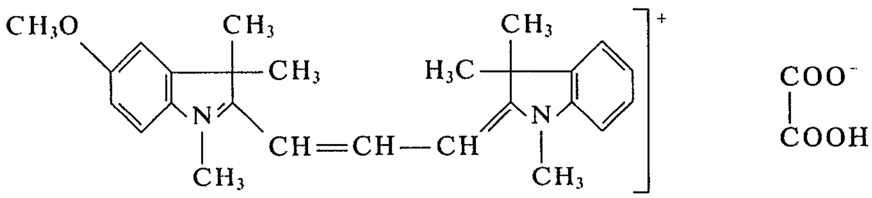

der Papier in brillanten roten Tönen anfärbt.
(C. I. Hue Indication Chart Nr. 51)

Beispiel 11

In einem Laboratoriumsreaktor werden 159 g 2-Methyl-indol-3-aldehyd und 173 g 1,3,3-Trimethyl-2-methylen-indolin auf 80°C erwärmt und 90 g Oxalsäure zugegeben. Es bildet sich eine Schmelze, aus der nach 30 min der Farbstoff auskristallisiert. Man läßt 1 h bei 100°C nachrühren und destilliert anschließend im Vakuum der Wasserstrahlpumpe das Kondensationswasser ab. Man erhält 378 g eines pulverförmigen Farbstoffes der Formel:

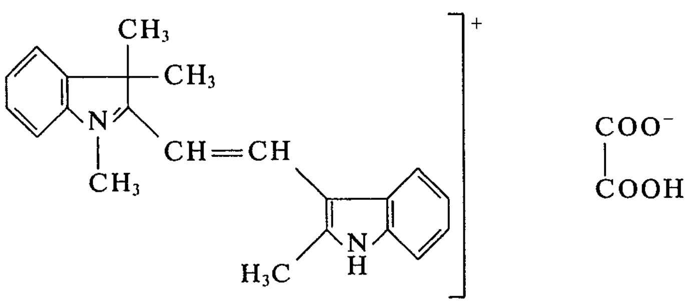

der Polyacrylnitrilfasern orange anfärbt.
(C. I. Hue Indication Chart Nr. 4)

Verwendet man anstelle von 1,3,3-Trimethyl-2-methylen-indolin die äquimolekulare Menge 1,3,3-Trimethyl-5-methoxy-2-methylen-indolin oder 1,3,3-Trimethyl-5-chlor-2-methylen-indolin und verfährt sonst in gleicher Weise, so erhält man ebenfalls wertvolle Farbstoffe, die Polyacrylnitril orange anfärben.

Beispiel 12

In einem Laboratoriumsreaktor werden 406 g 1,3,3-Trimethyl-5-methoxy-2-methylen-indolin und 298 g 4-Dimethylamino-benzaldehyd auf 50°C erwärmt und anschließend 185 g Oxalsäure zugesetzt. Die Temperatur steigt innerhalb von 3 min auf 80°C an und der Farbstoff kristallisiert aus. Nach 5stündigem Rühren bei 95°C erhält man einen pulverförmigen Farbstoff der Formel

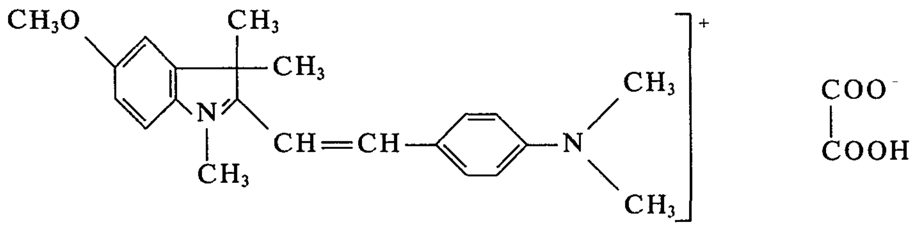

der Polyacrylnitrilfasern in einem blaustichigen Rot anfärbt.
(C. I. Hue Indication Chart Nr. 10)

Verwendet man anstelle von 298 g 4-Dimethylamino-benzaldehyd 354 g 4-Diethylamino-benzaldehyd und verfährt sonst in gleicher Weise, so erhält man einen pulverförmigen Farbstoff, der Polyacrylnitril in einem stark blaustichigen Rot anfärbt.
(C. I. Hue Indication Chart Nr. 11)

Setzt man anstelle von 4-Dimethylaminobenzaldehyd 376 g 4-(N-Methyl-N-$\beta$-cyanethyl-amino)-benzaldehyd ein und arbeitet ansonsten wie oben angegeben, so erhält man einen pulverförmigen Farbstoff, der Polyacrylnitril in gelbstichig roten Tönen anfärbt.

Beispiel 13

In einem Laboratoriumsreaktor werden 260 g 1,3,3-Trimethyl-2-methylen-indolin und 368 g 4-(N-Methyl-N-(4-ethoxy-phenyl)-amino)-benzaldehyd auf 50°C erwärmt und anschließend mit 100 g Oxalsäure versetzt. Dann erwärmt man die Schmelze auf 100°C, und der Farbstoff beginnt nach wenigen Minuten auszukristallisieren. Das Reaktionsgemisch wird 8 h bei 95°C gerührt und anschließend der pulverförmige Farbstoff der Apparatur entnommen. Er färbt Polyacrylnitrilmaterialien in rotstichig violetten Tönen an.
(C. I. Hue Indication Chart Nr. 11)

Beispiel 14

In einem Laboratoriumsreaktor werden 260 g 1,3,3-Trimethyl-2-methylen-indolin, 368 g 4-(N-Methyl-N(4-ethoxy-phenyl)-amino)-benzaldehyd und 100 g Toluol auf 80°C erwärmt. Man setzt 200 g Oxalsäure hinzu und rührt das Reaktionsgemisch 12 h bei 95°C. Anschließend wird im Vakuum der Wasserstrahlpumpe Toluol und das Kondensationswasser abdestilliert, wobei die Schmelze kristallisiert. Der so erhaltene pulverförmige Farbstoff der Formel:

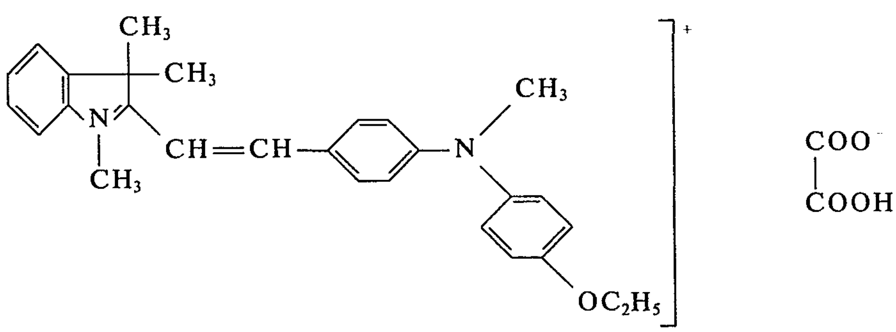

färbt Polyacrylnitril in rotstichig violetten Tönen an.
(C. I. Hue Indication Chart Nr. 11)

Beispiel 15

In einem Laboratoriumsreaktor werden 462 g 1,3,3-Trimethyl-5-carbomethoxy-2-methylen-indolin und 298 g 4-Dimethylamino-benzaldehyd bei 50°C verrührt und anschließend mit 185 g Oxalsäure

versetzt. Die Schmelze erhitzt sich dabei innerhalb von 5 min auf 80°C, und der Farbstoff kristallisiert. Nach 6stündigem Rühren bei 95°C wird der kristalline Farbstoff der Apparatur entnommen. Er färbt Polyacrylnitrilfasern in einem stark blaustichigen Rot an.
(C. I. Hue Indication Chart Nr. 10)

Verwendet man anstelle von 298 g 4-Dimethylamino-benzaldehyd 354 g 4-Diethylamino-benzaldehyd und verfährt sonst in gleicher Weise, so erhält man ebenfalls einen wertvollen Farbstoff, der Polyacrylnitrilfasern in einem stark blaustichigen Rot anfärbt.
(C. I. Hue Indication Chart Nr. 11)

Ersetzt man den 4-Dimethylamino-benzaldehyd durch 376 g 4-(N-Methyl-N-β-cyanethyl-amino)-benzaldehyd und läßt die übrigen Reaktionsbedingungen unverändert, so erhält man einen pulverförmigen Farbstoff, der Polyacrylnitril in einem gelbstichigen Rot anfärbt.
(C. I. Hue Indication Chart Nr. 50)

## Beispiel 16

In einem Laboratoriumsreaktor werden 415 g 1,3,3-Trimethyl-5-chlor-2-methylen-indolin und 330 g 4-Diethylamino-benzaldehyd bei 50°C verrührt und anschließend mit 170 g Oxalsäure versetzt. Innerhalb von 10 min steigt die Temperatur der Schmelze auf 90°C an. Anschließend kristallisiert der Farbstoff aus. Man läßt das Reaktionsgemisch 2 h bei 95°C rühren und destilliert anschließend das Kondensationswasser im Vakuum der Wasserstrahlpumpe ab. Man erhält einen pulverförmigen Farbstoff der Formel:

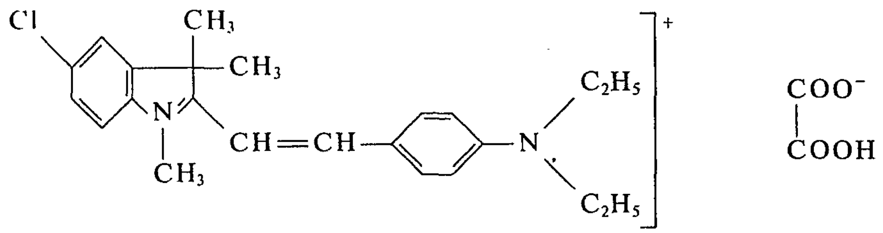

der Polyacrylnitril in stark blaustichig roten Tönen anfärbt.
(C. I. Hue Indication Chart Nr. 10)

Ersetzt man den 4-Diethylamino-benzaldehyd durch 376 g 4-(N-Methyl-N-β-cyanethylamino)-benzaldehyd und verfährt sonst in gleicher Weise, so erhält man ebenfalls einen wertvollen Farbstoff, der Polyacrylnitrilmaterialien in einem gelbstichigen Rot anfärbt.
(C. I. Hue Indication Chart Nr. 49)

## Beispiel 17

560 g 1,3,3-Trimethyl-5-benzyloxy-2-methylen-indolin und 298 g 4-Dimethylamino-benzaldehyd werden in einem Laboratoriumsreaktor bei 50°C zu einer homogenen Schmelze verrührt. Anschließend setzt man 185 g Oxalsäure zu. Binnen 15 min steigt die Temperatur auf 95°C, dann kristallisiert der Farbstoff. Man läßt noch 4 h bei 95°C rühren und destilliert anschließend das Kondensationswasser im Vakuum ab. Man erhält 965 g eines pulverförmigen Farbstoffes der Formel:

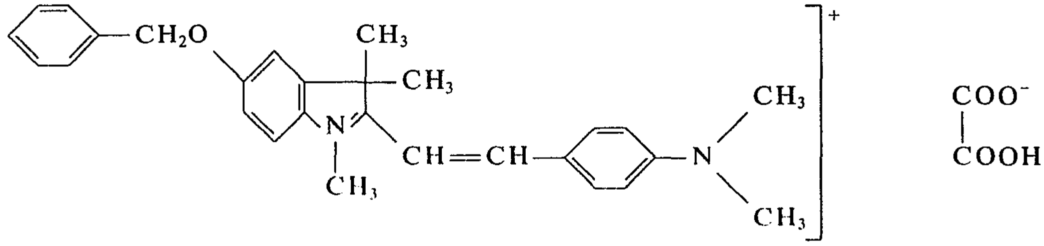

der Polyacrylnitrilfasern in einem stark blaustichigen Rot anfärbt.
(C. I. Hue Indication Chart Nr. 10)

Ersetzt man den 4-Dimethylamino-benzaldehyd durch 354 g Diethylamino-benzaldehyd und verfährt sonst in gleicher Weise, so erhält man ebenfalls einen wertvollen Farbstoff, der Polyacrylnitrilfasern stark blaustichig rot anfärbt.
(C. I. Hue Indication Chart Nr. 11)

Beispiel 18

382 g 2-Methyl-4-diethylamino-benzaldehyd und 346 g 1,3,3-Trimethyl-2-methylen-indolin werden bei 50°C zu einer homogenen Schmelze verrührt und anschließend mit 185 g Oxalsäure versetzt. Dann erwärmt man das Reaktionsgemisch auf 95°C, wobei nach 3stündigem Rühren Kristallisation eintritt. Man erwärmt weitere 3 h auf 95°C und destilliert anschließend das Kondensationswasser ab. Man erhält 904 g eines pulverförmigen Farbstoffes der Formel:

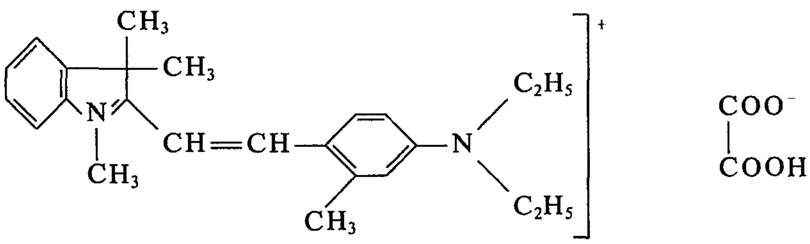

der Polyacrylnitrilfasern in einem stark blaustichigen Rot anfärbt.
(C. I. Hue Indication Chart Nr. 10)

Beispiel 19

In einem Laboratoriumsreaktor werden 216 g 2-Methyl-4-(N-ethyl-N, β-cyan-ethyl-amino)-benzaldehyd und 173 g 1,3,3-Trimethyl-2-methylen-indolin bei 50°C zu einer homogenen Schmelze verrührt und anschließend mit 95 g Oxalsäure versetzt. Die Schmelze erwärmt sich dabei auf 70°C. Man läßt noch 8 h bei 95°C rühren und destilliert dann das Kondensationswasser im Vakuum der Wasserstrahlpumpe ab. Man läßt unter Rühren abkühlen; hierbei kristallisiert der Farbstoff. Man erhält 474 g eines pulverförmigen Farbstoffes der Formel:

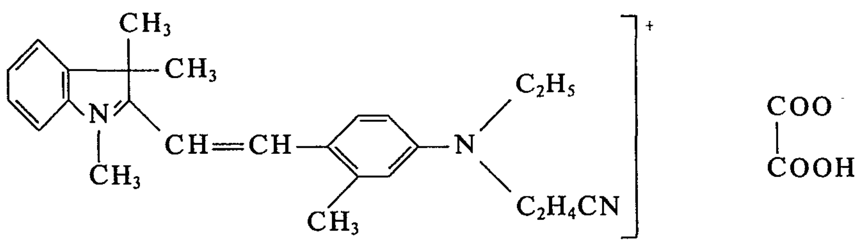

der Polyacrylnitrilfasern in einem klaren Rot anfärbt.
(C. I. Hue Indication Chart Nr. 50)

Beispiel 20

In einem Laboratoriumsreaktor werden 307 g 1,3,3-Trimethyl-5-carbobenzyloxy-2-methylen-indolin und 149 g 4-Dimethyl-amino-benzaldehyd bei 70°C zu einer homogenen Schmelze verrührt und anschließend mit 95 g Oxalsäure versetzt. Der Ansatz wird nunmehr auf 95°C erwärmt, wobei nach wenigen Minuten die Kristallisation des Farbstoffes beginnt. Man rührt 4 h bei 95°C, destilliert das während der Reaktion gebildete Wasser im Vakuum der Wasserstrahlpumpe ab und läßt den Ansatz unter Rühren erkalten. Man erhält 537 g eines Farbstoffsalzes der Formel:

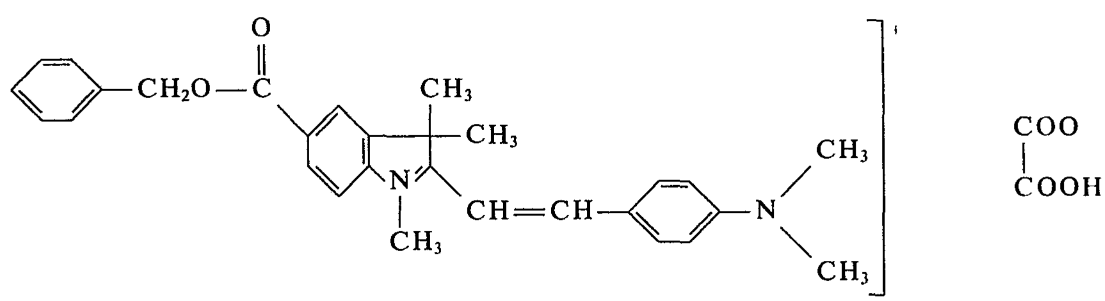

das Polyacrylnitrilfasern in stark blaustichig roten Tönen anfärbt.
(C. I. Hue Indication Chart Nr. 10)

Beispiel 21

In einem Laboratoriumsreaktor werden 215 g 1,3,3,4,5,7-Hexamethyl-2-methylen-indolin und 149 g 4-Dimethylamino-benzaldehyd bei 50°C zu einer homogenen Schmelze verrührt und anschließend mit 95 g Oxalsäure versetzt. Man erwärmt die Schmelze auf 95°C, wobei nach wenigen Minuten Kristallisation eintritt. Man läßt den Ansatz nun 4 h bei 95°C weiterrühren und destilliert anschließend das Kondensationswasser im Vakuum der Wasserstrahlpumpe ab. Schließlich läßt man den Ansatz unter Rühren erkalten. Man erhält 442 g eines Farbstoffsalzes der Formel:

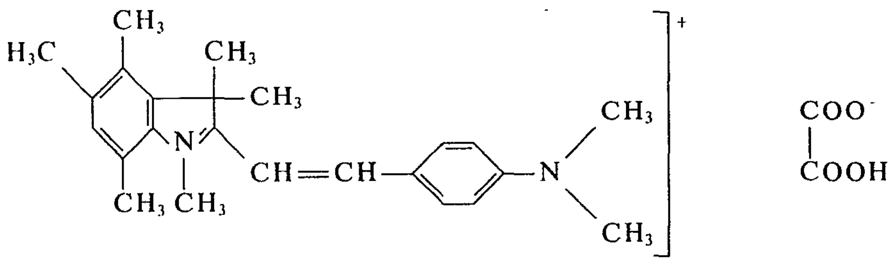

das Polyacrylnitrilfasern in einem blaustichigen Rot anfärbt.
(C. I. Hue Indication Chart Nr. 10)

Verwendet man anstelle von 1,3,3,4,5,7-Hexamethyl-2-methylen-indolin die gleiche Menge 1,3,3-Trimethyl-7-isopropyl-2-methylen-indolin und verfährt sonst in gleicher Weise, so erhält man ebenfalls einen wertvollen Farbstoff, der Polyacrylnitrilfasern in blaustichig roten Tönen anfärbt.
(C. I. Hue Indication Chart Nr. 10)

Beispiel 22

263 g 1,3,3-Trimethyl-5-benzyl-2-methylen-indolin und 149 g 4-Dimethyl-amino-benzaldehyd werden bei 50°C zu einer homogenen Schmelze verrührt und mit 95 g Oxalsäure versetzt. Die Schmelze erhitzt sich innerhalb von 2 min auf 78°C und kristallisiert während des Aufheizens auf 95°C. Man läßt den Ansatz 4 h bei 95°C rühren und destilliert anschließend das Kondensationswasser im Vakuum der Wasserstrahlpumpe ab. Man erhält ein Farbstoffsalz der Formel:

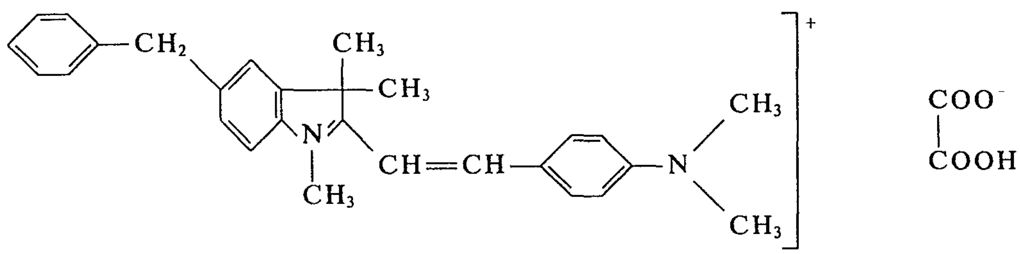

das Polyacrylnitrilfasern in einem blaustichigen Rot anfärbt.
(C. I. Hue Indication Chart Nr. 9)

Verwendet man anstelle von 1,3,3-Trimethyl-5-benzyl-2-methylen-indolin die äquimolekulare Menge 1,3,3,4,6,7-Hexamethyl-2-methylen-indolin und verfährt sonst in gleicher Weise, so erhält man ebenfalls ein Farbstoffsalz, das Polyacrylnitrilfasern blaustichig rot anfärbt.
(C. I. Hue Indication Chart Nr. 10)

Beispiel 23

In einem Laboratoriumsreaktor werden 150 g 1-Methyl-2-phenyl-indol-3-aldehyd und 111 g 1,3,3-Trimethyl-2-methylen-indolin bei 70°C verrührt und dann mit 58 g Oxalsäure versetzt. Man erwärmt nun auf 95°C, wobei nach 10 min der Farbstoff kristallisiert. Man erwärmt noch 2 h auf 95°C und destilliert dann das Kondensationswasser im Vakuum der Wasserstrahlpumpe ab. Man erhält ein Farbstoffsalz der Formel:

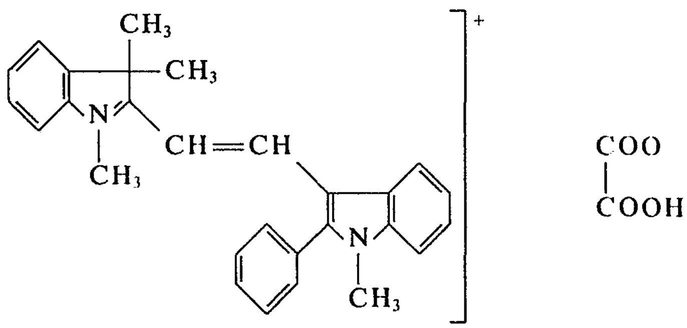

das Polyacrylnitrilfasern in einem rotstichigen Orange anfärbt.
(C. I. Hue Indication Chart Nr. 6)

Setzt man anstelle von 1,3,3-Trimethyl-2-methylen-indolin die äquimolekulare Menge 1,3,3-Trimethyl-5-methoxy-2-methylen-indolin ein und verfährt sonst in gleicher Weise, so erhält man ebenfalls ein Farbsalz, das Polyacrylnitrilfasern in stark rotstichig orangen Tönen anfärbt.
(C. I. Hue Indication Chart Nr. 7)

Beispiel 24

In einem Laboratoriumsreaktor werden 203 g 1-β-Hydroxyethyl-3,3-dimethyl-2-methylen-indolin und 149 g 4-Dimethylamino-benzaldehyd bei 50°C zu einer homogenen Schmelze verrührt und dann mit 95 g Oxalsäure versetzt. Die Schmelze wird anschließend bei 95°C nachgerührt und kristallisiert dabei unter Temperaturanstieg bis auf 107°C. Man läßt den Ansatz weitere 4 h bei 95°C—100°C nachrühren und destilliert anschließend im Vakuum der Wasserstrahlpumpe das Kondensationswasser ab. Nun läßt man den Ansatz unter Rühren erkalten und erhält 433 g eines Farbsalzes der Formel

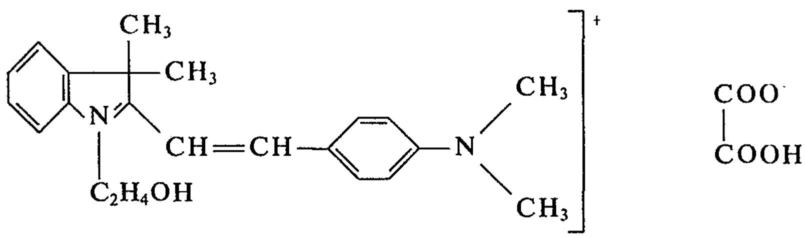

das Polyacrylnitrilfasern in blaustichig roten Tönen anfärbt.
(C. I. Hue Indication Chart Nr. 9)

Setzt man anstelle von 1,β-Hydroxyethyl-3,3-dimethyl-2-methylen-indolin die äquimolekulare Menge 1,3,3,5-Tetramethyl-2-methylen-indolin ein und verfährt sonst in gleicher Weise, so erhält man ebenfalls ein Farbsalz, das Polyacrylnitrilfasern blaustichig rot anfärbt.
(C. I. Hue Indication Chart Nr. 9)

Beispiel 25

In einem Laboratoriumsreaktor werden 215 g 1,3,3,5-Tetramethyl-2-methylen-indolin-ω-aldehyd und 173 g 1,3,3-Trimethyl-2-methylen-indolin bei 90°C zu einer homogenen Schmelze verrührt. Man trägt dann 90 g Oxalsäure ein und erwärmt den Ansatz auf 100°C. Nach 35 min kristallisiert der Farbstoff aus. Man läßt den Ansatz noch 4 h bei 100°C nachrühren und destilliert dann das Kondensationswasser im Vakuum der Wasserstrahlpumpe ab. Unter Rühren läßt man das Reaktionsgemisch erkalten. Man erhält 467 g eines Farbstoffsalzes der Formel:

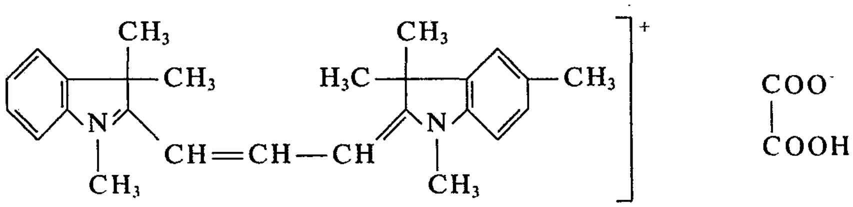

das holzschliffhaltiges Papier blaustichig rot anfärbt.
(C. I. Hue Indication Chart Nr. 51)

Setzt man anstelle von 1,3,3,5-Tetramethyl-2-methylen-indolin-ω-aldehyd 231 g 1,3,3-Trimethyl-5-methoxy-2-methylen-indolin-ω-aldehyd ein und verfährt sonst in gleicher Weise, so erhält man ebenfalls ein Farbsalz, das holzschliffhaltiges Papier in stark blaustichig roten Farbtönen anfärbt. (C. I. Hue Indication Chart Nr. 10)

Beispiel 26

In einem Laboratoriumsreaktor werden 259 g 1,3,3-Trimethyl-5-carboxy-methyl-2-methylen-indolin-ω-aldehyd + 173 g 1,3,3-Trimethyl-2-methylen-indolin auf 100°C erwärmt und 90 g Oxalsäure eingetragen. Man erhöht nun die Temperatur auf 120°C und läßt den Ansatz 4 h bei dieser Temperatur rühren. Nach 45 min tritt Kristallisation des Farbstoffes ein. Man destilliert das Kondensationswasser im Vakuum der Wasserstrahlpumpe ab und läßt den Ansatz unter Rühren erkalten. Man erhält 512 g eines Farbsalzes der Formel:

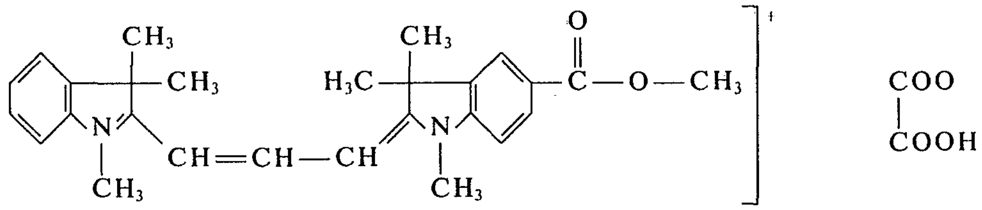

das holzschliffhaltiges Papier in stark blaustichig roten Tönen anfärbt. (C. I. Hue Indication Chart Nr. 10)

Beispiel 27

In einem Laboratoriumsreaktor werden 157 g 1,3,3-Trimethyl-5-methoxy-2-cyanmethylen-indolin-ω-aldehyd und 106 g 1,3,3-Trimethyl-2-methylen-indolin auf 90°C erwärmt und 55 g Oxalsäure eingetragen. Man erwärmt den Ansatz auf 110°C und läßt ihn 12 h bei dieser Temperatur rühren, wobei nach 2 h Kristallisation eintritt. Das gebildete Kondensationswasser wird im Vakuum der Wasserstrahlpumpe abdestilliert und der Ansatz unter Rühren erkalten gelassen. Man erhält 305 g eines Farbstoffsalzes der Formel:

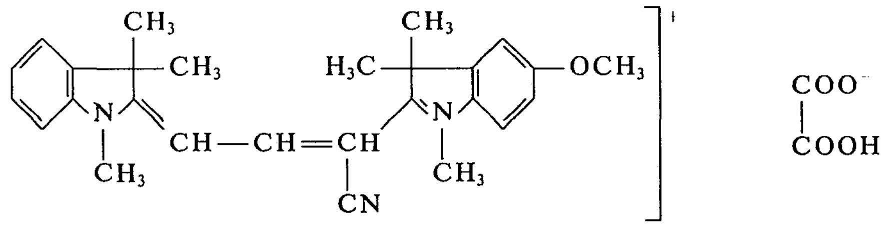

das Polyacrylnitrilfasern in roten Farbtönen anfärbt. (C. I. Hue Indication Chart Nr. 50)

Beispiel 28

In einem Laboratoriumsreaktor werden 112,5 g 2-Methyl-4-(N-ethyl-N,β-chlorethylamino)-benzaldehyd und 86,5 g 1,3,3-Trimethyl-2-methylen-indolin mit 50 g Toluol bei 30°C verrührt und anschließend mit 46 g Oxalsäure versetzt. Man hält die Schmelze zunächst 30 min bei 50°C und erhitzt sie dann auf 70°C. Nach 1stündigem Rühren bei 70°C kristallisiert die Schmelze. Man destilliert nun Toluol und Kondensationswasser im Vakuum der Wasserstrahlpumpe ab und rührt noch weitere 2 h bei 70°C nach. Man erhält so ebenfalls den in Beispiel 4 beschriebenen Farbstoff in pulvriger Form.

Beispiel 29

In einem Laboratoriumsreaktor werden 249 g 4-(N-Ethyl-N,β-acetoxypropyl-amino)-benzaldehyd und 203 g 1,3,3-Trimethyl-5-methoxy-2-methylen-indolin bei 50°C zu einer homogenen Schmelze verrührt und dann mit 95 g Oxalsäure versetzt. Man läßt den Ansatz 5 h bei 95°C rühren, wobei der Farbstoff vollständig durchkristallisiert. Das gebildete Kondensationswasser wird nun im Vakuum der

Wasserstrahlpumpe abdestilliert und der Ansatz unter Rühren erkalten gelassen. Man erhält 532 g eines Farbstoffes der Formel:

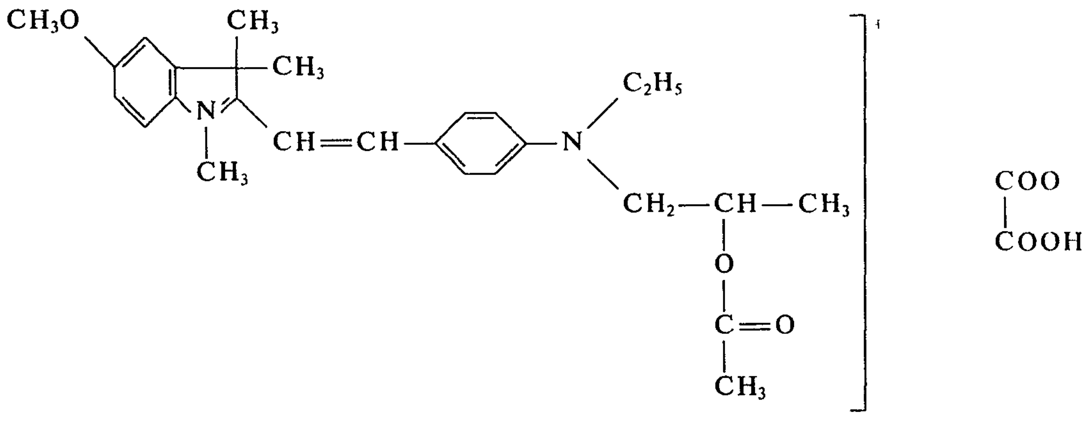

der Polyacrylnitrilfasern blaustichig rot anfärbt.
(C. I. Hue Indication Chart Nr. 10)

Beispiel 30

Polyacrylnitrilgarn wird in einem Strangfärbeapparat im Flottenverhältnis 1/40 in ein Färbebad eingebracht, das im Liter 0,06 g des in Beispiel 1 beschriebenen Farbstoffes sowie 0,06 g des Umsetzungsproduktes von Oleylalkohol mit 56 mol Ethylenoxid enthält und das mit 60%iger Essigsäure auf einen pH-Wert von 4,5 eingestellt wurde. Das Färbebad wird zum Sieden erhitzt und 90 min bei Siedetemperatur gefärbt. Anschließend wird das Stranggarn gespült und getrocknet. Es ist in einem brillanten gelbstichigen Rot gefärbt. In gleicher Weise lassen sich die in den folgenden Beispielen beschriebenen Farbstoffe zum Färben von Polyacrylnitril verwenden.

**Patentansprüche**

1. Verfahren zur Herstellung von kationischen Methinfarbstoffen der allgemeinen Formel

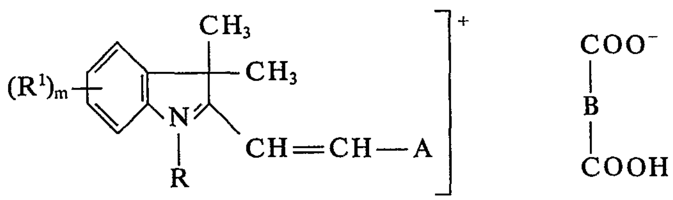

worin

R für einen gegebenenfalls durch Hydroxy, Alkoxy mit 1 bis 4 C-Atomen, Acyloxy, Halogen, Cyan, Carboxy, $C_1$—$C_4$-Carbalkoxy, Carbonamido oder Acetyl substituierten Alkylrest mit 1 bis 4 C-Atomen,

$R^1$ für Wasserstoff, einen Alkylrest mit 1 bis 4 C-Atomen, Halogen, Alkoxy mit 1 bis 4 C-Atomen, Hydroxyalkoxy mit 2—4 C-Atomen, einen gegebenenfalls durch Halogen, $C_1$—$C_4$-Alkyl oder $C_1$—$C_4$-Alkoxy substituierten Phenoxyrest, Benzyloxy, Benzyl, Carboxyl, einen Carbonsäurealkylester mit 1 bis 4 C-Atomen, eine gegebenenfalls durch 1 oder 2 $C_1$—$C_4$-Alkylreste substituierte Carbonamidgruppe, eine gegebenenfalls durch 1 oder 2 $C_1$—$C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

A für einen Rest der Formel

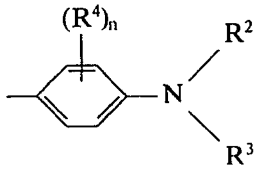

in welcher

$R^2$ und $R^3$ unabhängig voneinander für einen gegebenenfalls durch Hydroxy, $C_1$—$C_4$-Alkoxy, Halogen, Cyan, Phenyl, Carbalkoxy mit 1 bis 4 C-Atomen, Carbonamid, Acyloxy, Benzyloxy, Sulfonamido oder Acylamino substituierten Alkylrest mit 1 bis 4 C-Atomen stehen
$R^2$ zusätzlich noch für einen gegebenenfalls durch Halogen, $C_1$—$C_4$-Alkyl oder $C_1$- bis $C_4$-Alkoxy substituierten Phenyl- oder Benzylrest steht oder mit dem benachbarten C-Atom des Benzolringes einen teilhydrierten N- und gegebenenfalls O-haltigen 5- oder 6-Ring bilden kann,
$R^4$ Wasserstoff, einen Alkylrest mit 1 bis 4 C-Atomen, einen Alkoxyrest mit 1 bis 4 C-Atomen oder Halogen bedeutet,

oder für einen Rest der Formel

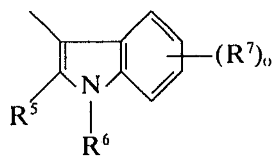

in welcher

$R^5$ einen Alkylrest mit 1 bis 4 C-Atomen, einen gegebenenfalls durch Halogen, $C_1$—$C_4$-Alkyl oder $C_1$- bis $C_4$-Alkyloxy substituierten Phenylrest oder einen Carbalkoxyrest mit 1 bis 4 C-Atomen,
$R^6$ Wasserstoff, einen gegebenenfalls durch Hydroxy, Halogen, Alkoxy mit 1 bis 4 C-Atomen, Cyan oder Acyloxy substituierten Alkylrest mit 1 bis 4 C-Atomen und
$R^7$ Wasserstoff, Halogen, $C_1$- bis $C_4$-Alkyl, $C_1$- bis $C_4$-Alkoxy, Carbalkoxy mit 1 bis 4 C-Atomen, $C_1$- bis $C_4$-Alkylsulfonyl, Phenylsulfonyl, Acetyl oder Benzoyl bedeuten,

oder für einen Rest der Formel

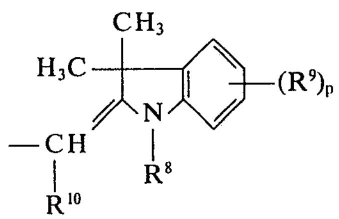

stehen, worin

$R^8$ und $R^9$ unabhängig voneinander die gleiche Bedeutung wie R und $R^1$ haben,
$R^{10}$ Wasserstoff oder die Cyangruppe bezeichnet,
B für eine Einfachbindung oder für einen durch Hydroxylreste und gegebenenfalls eine zusätzliche Carboxylgruppe substituierten $C_1$- bis $C_4$-Alkylenrest stehen und

die Indizes m, n, o und p unabhängig voneinander 1—4 bedeuten,

dadurch gekennzeichnet, daß man eine Verbindung der Formel

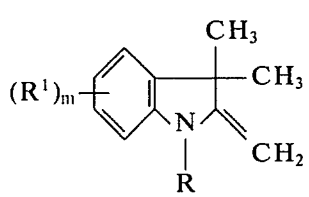

mit äquimolekularen Mengen einer Verbindung der Formel

A—CHO

und mit 1 bis 5 mol einer Verbindung der Formel

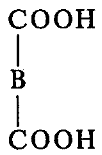

in Gegenwart von 0—30% eines organischen Lösungsmittels und 0—15% Wasser, beide Prozentangaben bezogen auf die Summe der Gewichte der beiden erstgenannten Komponenten zur Umsetzung bringt.

2. Verfahren gemäß Anspruch 1, dadurch gekennzeichnet, daß das Molverhältnis der in Anspruch 1 angegebenen Verbindungen Aldehyd/Methylenindolin/Dicarbonsäure 1/1/0,9 bis 1,2 beträgt.

3. Verfahren gemäß Ansprüchen 1 und 2, dadurch gekennzeichnet, daß man die Umsetzung in einer Reaktionsapparatur durchführt, die in der Lage ist, zähflüssige und später kristallisierende Farbstoffschmelzen gleichmäßig zu vermischen und zu feinem Pulver zu vermahlen.

4. Verfahren zu Herstellung von verkaufsfertigen Farbstoffeinstellungen gemäß Anspruch 1, dadurch gekennzeichnet, daß man der in einem Schaufeltrockner nach Anspruch 1 durchgeführten Umsetzung vor, während oder nach der Reaktion Stellmittel zusetzt.

5. Verfahren nach Anspruch 1, dadurch gekennzeichnet, daß man die Umsetzung in Gegenwart von bis zu 30% eines organischen Lösungsmittels durchführt.

6. Verfahren gemäß Ansprüchen 1 bis 5, dadurch gekennzeichnet, daß die Umsetzung bei Temperaturen zwischen 40 und 120°C durchgeführt wird.

**Claims**

1. Process for the preparation of cationic methine dyestuffs of the general formula

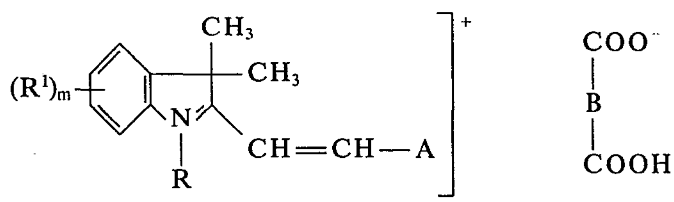

wherein

R represents an alkyl radical having 1 to 4 C atoms and which is optionally substituted by hydroxyl, alkoxy having 1 to 4 C atoms, acyloxy, halogen, cyano, carboxyl, $C_1$—$C_4$-carbalkoxy, carboxamido or acetyl,

$R^1$ represents hydrogen, an alkyl radical having 1 to 4 C atoms, halogen, alkoxy having 1 to 4 C atoms, hydroxyalkoxy having 2—4 C atoms, a phenoxy radical which is optionally substituted by halogen, $C_1$—$C_4$-alkyl or $C_1$—$C_4$-alkoxy, benzyloxy, benzyl, carboxyl, an alkyl carboxylate having 1 to 4 C atoms, a carboxamide group optionally substituted by 1 or 2 $C_1$—$C_4$-alkyl radicals, a sulphonamide group optionally substituted by 1 or 2 $C_1$—$C_4$-alkyl radicals, alkylsulphonyl having 1 to 4 C atoms, phenylsulphonyl or a cyano, trifluoromethyl, acetyl or benzoyl group, and

A represents a radical of the formula

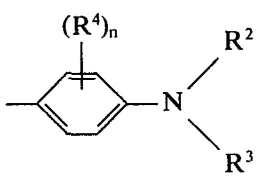

in which

$R^2$ and $R^3$ independently of one another represent an alkyl radical having 1 to 4 C atoms and which is optionally substituted by hydroxyl, $C_1$—$C_4$-alkoxy, halogen, cyano, phenyl, carbalkoxy having 1 to 4 C atoms, carboxamide, acyloxy, benzyloxy, sulphonamido or acylamino,

$R^2$ additionally also represents a phenyl or benzyl radical which is optionally substituted by halogen, $C_1$—$C_4$-alkyl or $C_1$ to $C_4$-alkoxy or $R^2$, together with the adjacent C atom of the benzene ring, can form a partially hydrogenated N- and, if appropriate, O-containing 5- or 6-ring, and

$R^4$ denotes hydrogen, an alkyl radical having 1 to 4 C atoms, an alkoxy radical having 1 to 4 C atoms or halogen,

or a radical of the formula

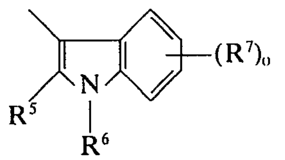

in which

$R^5$ denotes an alkyl radical having 1 to 4 C atoms, a phenyl radical optionally substituted by halogen, $C_1$- to $C_4$-alkyl or $C_1$- to $C_4$-alkyloxy or a carbalkoxy radical having 1 to 4 C atoms,
$R^6$ denotes hydrogen or an alkyl radical having 1 to 4 C atoms and which is optionally substituted by hydroxyl, halogen, alkoxy having 1 to 4 C atoms, cyano or acyloxy and
$R^7$ denotes hydrogen, halogen, $C_1$- to $C_4$-alkyl, $C_1$- to $C_4$-alkoxy, carbalkoxy having 1 to 4 C atoms, $C_1$- to $C_4$-alkylsulphonyl, phenylsulphonyl, acetyl or benzoyl

or a radical of the formula

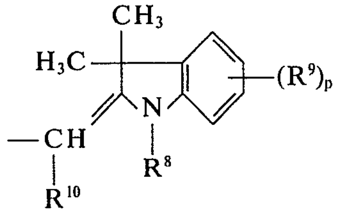

wherein

$R^8$ and $R^9$ independently of one another have the same meaning as R and $R^1$,
$R^{10}$ designates hydrogen or the cyano group,
B represents a single bond or a $C_1$- to $C_4$-alkylene radical which is substituted by hydroxyl radicals and which is optionally substituted by one additional carboxyl group and

the indices m, n, o and p independently of one another denote 1—4,
characterised in that a compound of the formula

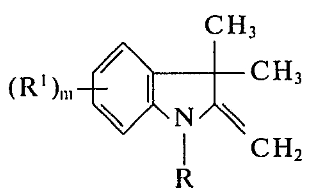

is reacted with equimolar amounts of a compound of the formula

A–CHO

and with 1 to 5 mols of a compound of the formula

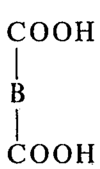

in the presence of 0—30% of an organic solvent and 0—15% of water, the two percentages being relative to the total of the weights of the two first-mentioned components.

2. Process according to Claim 1, characterised in that the molar ratio of the compounds aldehyde/methylene-indoline/dicarboxylic acid, indicated in Claim 1, is 1/1/0,9 to 1,2.

3. Process according to Claims 1 and 2, characterised in that the reaction is carried out in a reaction apparatus which is capable of uniformly mixing, and grinding into a fine powder, viscous and later crystallising dyestuff melts.

4. Process for preparing marketable dyestuff formulations according to Claim 1, characterised in that standardising agents are added before, during or after the reaction to the conversion according to

Claim 1 carried out in a paddle dryer.

5. Process according to Claim 1, characterised in that the reaction is carried out in the presence of up to 30% of an organic solvent.

6. Process according to Claims 1 to 5, characterised in that the reaction is carried out at temperatures between 40 and 120°C.

**Revendications**

1. Procédé de préparation de colorants cationiques de méthine de formule générale:

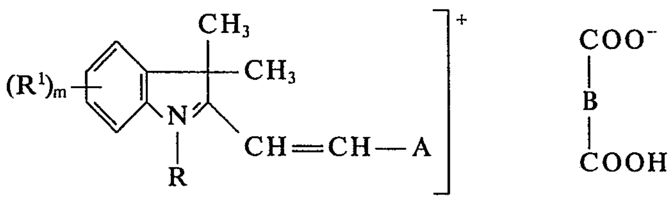

dans laquelle

R représente un groupe alkyle contenant 1 à 4 atomes de carbone et éventuellement substitué par un groupe hydroxy, par un groupe alcoxy contenant 1 à 4 atomes de carbone, par un groupe acyloxy, par un atome d'halogène, par un groupe cyano, par un groupe carboxy, par un groupe carbalcoxy en $C_1-C_4$, par un groupe carbonamido ou par un groupe acétyle,

$R^1$ représente un atome d'hydrogène, un groupe alkyle contenant 1 à 4 atomes de carbone, un atome d'halogène, un groupe alcoxy contenant 1 à 4 atomes de carbone, un groupe hydroxyalcoxy contenant 2 à 4 atomes de carbone, un groupe carboxy, un groupe benzyle, un groupe benzyloxy, un groupe phénoxy éventuellement substitué par un atome d'halogène, par un groupe alkyle en $C_1-C_4$ ou par un groupe alcoxy en $C_1-C_4$, un ester alkylique d'un acide carboxylique contenant 1 à 4 atomes de carbone, un groupe carbonamido éventuellement substitué par un ou deux groupes alkyle en $C_1-C_4$, un groupe sulfonamido éventuellement substitué par un ou deux groupes alkyle en $C_1-C_4$, un groupe alkylsulfonyle contenant 1 à 4 atomes de carbone, un groupe phényl-sulfonyle, un groupe cyano, un groupe trifluorométhyle, un groupe acétyle ou un groupe benzoyle,

A représente un radical de formule:

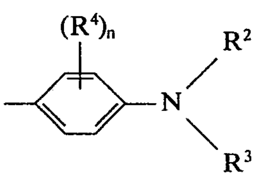

dans laquelle les radicaux

$R^2$ et $R^3$ représentent chacun indépendamment l'un de l'autre un groupe alkyle contenant 1 à 4 atomes de carbone et éventuellement substitué par un groupe hydroxy, par un groupe alcoxy en $C_1-C_4$, par un atome d'halogène, par un groupe cyano, par un groupe phényle, par un groupe carbalcoxy contenant 1 à 4 atomes de carbone, par un groupe carbonamido, par un groupe acyloxy, par un groupe benzyloxy, par un groupe sulfonamido ou par un groupe acylamino,

$R^2$ représente encore, en outre, un groupe benzyle ou un groupe phényle éventuellement substitué par un atome d'halogène, par un groupe alkyle en $C_1-C_4$ ou par un groupe alcoxy en $C_1-C_4$, ou encore, avec l'atome de carbone voisin du noyau benzène, il peut former un noyau pentagonal ou hexagonal partiellement hydrogéné contenant N et éventuellement O,

$R^4$ représente un atome d'hydrogène, un groupe alkyle contenant 1 à 4 atomes de carbone, un groupe alcoxy contenant 1 à 4 atomes de carbone ou un atome d'halogène,

ou un radical de formule:

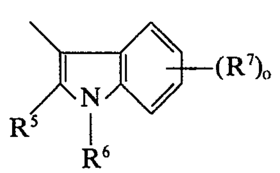

dans laquelle

$R^5$ représente un groupe alkyle contenant 1 à 4 atomes de carbone, un groupe phényle éventuellement substitué par un atome d'halogène, par un groupe alkyle en $C_1-C_4$ ou par un groupe alkyloxy en $C_1-C_4$, ou encore un groupe carbalcoxy contenant 1 à 4 atomes de carbone,
$R^6$ représente H, un groupe alkyle contenant 1 à 4 atomes de carbone et éventuellement substitué par un groupe hydroxy, par un atome d'halogène, par un groupe alcoxy contenant 1 à 4 atomes de carbone, par un groupe cyano ou par un groupe acyloxy, et
$R^7$ représente un atome d'hydrogène, un atome d'halogène, un groupe alkyle en $C_1-C_4$, un groupe alcoxy en $C_1-C_4$, un groupe carbalcoxy contenant 1 à 4 atomes de carbone, un groupe alkyl(en $C_1-C_4$) sulfonyle, un groupe phényl-sulfonyle, un groupe acétyle ou un groupe benzoyle,

ou un radical de formule:

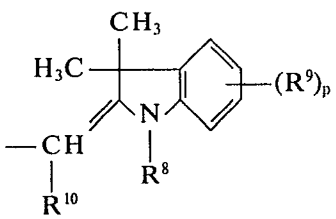

dans laquelle

$R^8$ et $R^9$ ont, indépendamment l'un de l'autre, la même signification que R et $R^1$,
$R^{10}$ représente un atome d'hydrogène ou le groupe cyano,
B représente une liaison simple ou un groupe alkylène en $C_1-C_4$ substitué par des groupes hydroxy et éventuellement par un groupe carboxy supplémentaire,

tandis que les indices m, n, o et p représentent chacun indépendamment l'un de l'autre un nombre de 1 à 4,
caractérisé en ce qu'on fait réagir un composé de formule:

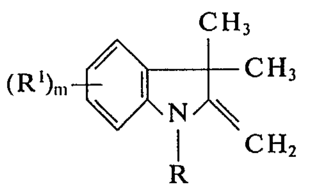

avec des quantités équimoléculaires d'un composé de formule:

A—CHO

et avec 1 à 5 moles d'un composé de formule:

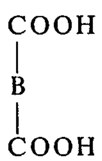

en présence de 0—30% d'un solvant organique et de 0—15% d'eau, les deux pourcentages indiqués étant calculés sur la somme des poids des deux composants mentionnés en premier lieu.

2. Procédé selon la revendication 1, caractérisé en ce que le rapport molaire des composés indiqués dans la revendication 1, à savoir l'aldéhyde/la méthylène-indoline/l'acide dicarboxylique est de 1/1/0,9 à 1,2.

3. Procédé selon les revendications 1 et 2, caractérisé en ce qu'on effectue la réaction dans un appareil réactionnel qui est en mesure de mélanger uniformément des masses fondues de colorants qui sont très visqueuses et qui cristallisent ultérieurement, puis de les broyer en une poudre fine.

4. Procédé en vue d'obtenir des réglages de colorants prêts à la vente selon la revendication 1, caractérisé en ce que, avant, pendant ou après la réaction, on ajoute des agents de réglage à la réaction effectuée dans un sécheur à palettes selon la revendication 1.

5. Procédé selon la revendication 1, caractérisé en ce qu'on effectue la réaction en présence d'un solvant organique en une quantité allant jusqu'à 30%.

6. Procédé selon les revendications 1 à 5, caractérisé en ce qu'on effectue la réaction à des températures comprises entre 40 et 120°C.